# EUROPEAN PATENT SPECIFICATION

(11) **EP 3 881 590 B1**
(45) Date of publication and mention of the grant of the patent: **22.04.2026**
(21) Application number: 18833171.4
(22) Date of filing: 03.12.2018
(51) Int. Cl.: H04W 24/02

(54) **METHODS AND NODES FOR PREDICTING QOS OF A UE SESSION BASED ON SLICE STATUS**
VERFAHREN UND KNOTEN ZUR VORHERSAGE DER DIENSTGÜTE EINER BENUTZERGERÄTESITZUNG AUF BASIS EINES SLICE-STATUS
PROCÉDÉS ET N?UDS DE PRÉDICTION D'UNE QOS D'UNE SESSION D'UE SUR LA BASE D'UN ÉTAT D'UNE TRANCHE

(43) Date of publication of application: 22.09.2021
(73) Proprietor: Huawei Technologies Co., Ltd., Longgang District Shenzhen, Guangdong 518129 (CN)
(72) Inventor: HAMIDIAN, Ali, 16440 Kista (SE); JEON, Seil, 16440 Kista (SE); VAKEESAR, Siva, 16440 Kista (SE)
(74) Representative: Thun, Clemens
(86) International application number: PCT/EP2018/083251
(87) International publication number: WO 2020/114569

(56) References cited:
- US-A1- 2017 078 157
- ZTE: "Solution to Key issue#11", vol. SA WG2, no. Dongguan, China; 20181015 - 20181019, 9 October 2018 (2018-10-09), XP051539566, Retrieved from the Internet <URL:http://www.3gpp.org/ftp/tsg%5Fsa/WG2%5FArch/TSGS2%5F129%5FDongguan/Docs/S2%2D1810596%2Ezip> [retrieved on 20181009]
- HUAWEI ET AL: "Consideration of 5GAA NESQO aspects", vol. SA WG2, no. Dongguan, China; 20181015 - 20181019, 9 October 2018 (2018-10-09), XP051539648, Retrieved from the Internet <URL:http://www.3gpp.org/ftp/tsg%5Fsa/WG2%5FArch/TSGS2%5F129%5FDongguan/Docs/S2%2D1810697%2Ezip> [retrieved on 20181009]
- HUAWEI ET AL: "KI#15: Update of Solution 23", vol. SA WG2, no. West Palm Beach, FL, USA; 20181126 - 20181130, 30 November 2018 (2018-11-30), XP051499511, Retrieved from the Internet <URL:http://www.3gpp.org/ftp/tsg%5Fsa/WG2%5FArch/TSGS2%5F129BIS%5FWest%5FPalm%5FBeach/Docs/S2%2D1812890%2Ezip> [retrieved on 20181130]
- CHINA MOBILE: "Solution: Predictable network performance", vol. SA WG2, no. Sophia Antipolis, France; 20180820 - 20180824, 14 August 2018 (2018-08-14), XP051536976, Retrieved from the Internet <URL:http://www.3gpp.org/ftp/tsg%5Fsa/WG2%5FArch/TSGS2%5F128BIS%5FSophia%5FAntipolis/Docs/S2%2D188030%2Ezip> [retrieved on 20180814]
- HUAWEI ET AL: "Use Case: NWDA-assisting E2E QoS Assurance", vol. SA WG2, no. Sanya, China; 20180416 - 20180420, 10 April 2018 (2018-04-10), XP051437935, Retrieved from the Internet <URL:http://www.3gpp.org/ftp/tsg%5Fsa/WG2%5FArch/TSGS2%5F127%5FSanya/Docs/> [retrieved on 20180410]
- ZTE: "Solution proposal on the key issue#15", vol. SA WG2, no. Dongguan, China; 20181015 - 20181019, 9 October 2018 (2018-10-09), XP051539565, Retrieved from the Internet <URL:http://www.3gpp.org/ftp/tsg%5Fsa/WG2%5FArch/TSGS2%5F129%5FDongguan/Docs/S2%2D1810595%2Ezip> [retrieved on 20181009]

## Description

### TECHNICAL FIELD

Implementations described herein generally relate to a network node, a method in the network node, a prediction function network node, a method in the prediction function network node, a user equipment and a method in the user equipment. In particular, a mechanism is herein described, for providing information concerning slice status of a cell from the network node to the prediction function network node, which information forms a support for making Quality of Service estimation of a user equipment appearing in the cell.

### BACKGROUND

Quality of Service (QoS) flows belonging to a Packet Data Unit (PDU) session established by a User Equipment (UE) can be mapped on to one or many slice types or Network Slice Selection Assistance information (NSSAI). In order to accommodate a QoS flow and to provide QoS, it is important for a 5th Generation System (5GS) to ascertain whether a required slice or NSSAI is currently supported by a cell.

The need to support Predictive QoS (P-QoS) has recently been felt by different industries and in response Service and System Aspects 1 (SA1) recently agreed on some requirements in this direction as part of FS_V2XIMP. The relevant SA1 requirements were captured in TR 22.886 V16.1.1. Although relevant Stage 1 related requirements are captured, it is not clear in third Generation Partnership Project (3GPP) in terms of what entity is responsible for collecting prediction related data and notifying its prediction results.

For enabling prediction of QoS for a communication session of a UE, it would be desired to find a way for a dedicated network node to know cell capability and what slice types are available in different parts of a Public Land Mobile Network (PLMN). Some examples of desired cell capabilities may be support for slice, Carrier Aggregation (CA), Dual Connectivity (DC), Coordinated Multi-Point (CoMP) Access, and/ or frequency ranges in use. Some further examples may comprise instantaneous load and residual capacity of each slice type (e.g., NSSAI) per cell per Tracking Area (TA). Yet some examples may comprise e.g. which AMF serves different cells per TA, and/ or which slice types required by the PDU Session in question.

Information concerning Slice Specific information may be collected by the UE and passed on to the network in a UE-based solution. However, it would be desired to develop a network-based solution where in addition to collecting slice availability per geography, residual capacity and load level pertaining to each slice type or NSSAI per geography area is collected. In addition, measures may be taken to capture details pertaining to cell capability and frequency range in use, enabling prediction whether the cell can instantiate and provide a new slice on demand provided that the cell has required hardware capability, frequency range and residual capacity.

Technical Standard (TS) 23.501 briefly describes the functionalities of NWDAF and mentions that NWDAF provides slice specific network data analytics to a network function. The NWDAF may provide network analytics information (i.e., load level information) to the network function on a network slice instance level. But it does not elaborate as to how NWDAF collects such information. It would be desired to provide a solution to these problems.

The document ZTE: "Solution to Key Issue #11", 3GPP Draft, XP 051539566 is an early standardization document dealing with network performance prediction.

The document HUAWEI ET AL: "Consideration of 5GAA NESQO Aspects", 3GPP Draft, XP 051539648 is also an early standardization document dealing with quality of service reporting in mobile communications.

### SUMMARY

It is therefore an object to obviate at least some of the above-mentioned disadvantages and to improve a Predictive- QoS (P-QoS) support. This and other objects are achieved by the features of the appended independent claims. Further implementation forms are apparent from the dependent claims, the description and the figures.

According to a first aspect, not covered by the invention, a prediction function network node is provided. The prediction function network node is configured to transmit a request for information concerning slice status of a cell, to a network node. Further, the prediction function network node is configured to receive the requested information concerning slice status of the cell from the network node. In addition, the prediction function network node is configured to determine QoS of a communication session of a UE served by the cell, at least partly based on the received information.

Thanks to the described aspect, by requesting and acquiring information concerning slice status of cells, a mechanism is provided to notify the prediction function network node concerning the slice status of the cell. Thereby, also QoS of UEs served by the cell in question may be determined or at least roughly estimated.

In a first possible implementation of the prediction function network node according to the first aspect, the prediction function network node may be configured to transmit the request comprising a periodicity for the network node to report the information concerning slice status of the cell.

By determining a periodicity of how often the network nodes are to report/ update slice status of the cells, it is ascertained that the prediction function network node is continuously provided with information concerning slice status of cells in the network.

In a second possible implementation of the prediction function network node according to the first aspect, the prediction function network node may be configured to receive information concerning required slice support of the communication session of the UE.

By obtaining information about required slice support of the UE, the prediction function network node may compare the required slice support of the UE with the previously obtained slice status of cells in the network and detect a match, or mismatch, respectively. Thereby, a change in QoS for the communication session of the UE may be detected, given the capabilities and current load of the target serving cell.

In a third possible implementation of the prediction function network node according to the first aspect, or any implementation thereof, the prediction function network node may be configured to determine QoS of the communication session of the UE served by the cell, based on the received information concerning slice status of the cell and the received information concerning required slice support of the communication session of the UE.

Based on the received information concerning required slice support of the communication session of the user equipment, a comparison could be made with the received information concerning slice status of the cell and the prediction function network node could thus determine QoS of the UE communication session.

In a fourth possible implementation of the prediction function network node according to the first aspect, or any implementation thereof, the prediction function network node may be configured to transmit information concerning the determined QoS of the communication session, to the UE.

By providing information concerning QoS to the UE, the UE is pre-warned and may adapt to the predicted QoS already before arriving to an area served by the cell in question, i.e. by closing down programs/ applications, by increasing distance and/ or decrease speed when the UE is integrated in a vehicle, etc., in a controlled manner which avoids abrupt sudden shutdowns.

In a fifth possible implementation of the prediction function network node according to the first aspect, or any implementation thereof, the prediction function network node may be configured to receive flight path information of the UE. Further, the prediction function network node may be configured to determine cells along the flight path. Further, the determined QoS for the communication session of the UE may be based at least partly on the received information concerning slice status of the determined cells along the flight path and the received information concerning required slice support of the communication session of the UE.

By acquiring information concerning flight path, cells along the flight path and slice status of the cells along the flight path, the prediction function network node is enabled to determine QoS of different cells along the flight path and predict QoS for the UE when arriving at these cells when passing along the flight path. Thereby, a better determination of QoS may be made, which is relevant for the UE.

An Application Function (AF) related to a V2X Application will configure with a PCF in terms of different QoS profiles that can be supported per QoS flow of a PDU Session pertaining to that V2X application. Each such QoS profile may additionally be configured with thresholds per QoS parameter that trigger a prediction function network node to notify the UE or AF in case thresholds associated with each QoS parameter is passed. These configuration details are learnt by the prediction function network node prior to or at the time of a PDU Session establishment.

In a sixth possible implementation of the prediction function network node according to the first aspect, or any implementation thereof, the prediction function network node may be configured to receive a threshold limit for a QoS parameter, based on Vehicle-to-Everything (V2X) application requirement, from an Access and Mobility Management Function, SMF or PCF directly. Furthermore, the prediction function network node may be configured to estimate the Quality of Service parameter of the currently supported QoS profile of the QoS flow belonging to the communication session. The prediction function network node may also be configured to compare the received threshold limit with the estimated Quality of Service parameter. In addition, the prediction function network node may be configured to transmit an alert to the UE when the estimated value of the QoS parameter forming the currently supported QoS profile of each QoS flow belonging to an established PDU session has a value outside the received threshold limit.

By comparing the predicted value of each QoS parameter with its configured threshold limit, an in-advance QoS Notification (IQN) warning can be sent to the UE indicating that the QoS is going to change. At the UE, appropriate measures could then be taken.

According to a second aspect, a method is provided in a prediction function network node. The method comprises transmitting a request for information concerning capabilities of a cell, to a network node. Further, the method comprises receiving the requested information concerning capabilities of the cell, from the network node. Further, the method may comprise receiving information regarding slice support required from a UE for a new or already established PDU session. The method in addition comprises determining QoS of a communication session of a UE served by the cell, partly based on the received information.

By requesting and acquiring information concerning slice status of cells, a mechanism is provided to notify the prediction function network node concerning the slice status of the cell. Thereby, also QoS of UEs served by the cell in question may be determined or at least roughly estimated.

In a first possible implementation of the method according to the second aspect, the method step of transmitting a request for information may comprise a periodicity for the network node to report the information concerning slice status of the cell.

By determining a periodicity of how often the network nodes are to report/ update slice status of the cells, it is ascertained that the prediction function network node is continuously provided with information concerning slice status of cells in the network.

In a second possible implementation of the method according to the second aspect, or any implementation thereof, the method may further comprise receiving information concerning required slice support of the communication session of the UE.

By obtaining information about required slice support of the UE, the prediction function network node may compare the required slice support of the UE with the previously obtained slice status of cells in the network and detect a match, or mismatch, respectively. Thereby, a change in QoS for the communication session of the UE may be detected, given the capabilities and current load of the target serving cell.

In a third possible implementation of the method according to the second aspect, or any implementation thereof, the method may also comprise determining QoS of the communication session of the UE served by the cell, based on the received information concerning slice status of the cell and the received information concerning required slice support of the communication session of the UE.

Based on the received information concerning required slice support of the communication session of the user equipment, a comparison could be made with the received information concerning slice status of the cell and the prediction function network node could thus determine QoS of the UE communication session.

In a fourth possible implementation of the method according to the second aspect, or any implementation thereof, the method may also comprise notifying the UE concerning the determined QoS of the communication session, to the UE.

By providing information concerning QoS to the UE, adaptations are possible at the application layer and/or Non-Access Stratum (NAS) level of the UE. Accordingly, the V2X Application can decrease/increase speed or inter-vehicle distance, change trajectory, switch to an appropriate Level of Automation (LoA) as specified in the latest TR 23.786. At the NAS-level, QoS profile of a QoS flow can be changed if a QoS flow can support multiple different QoS profiles as preconfigured by an AF at PCF. In general, the UE is pre-warned and may adapt to the predicted QoS already before arriving to an area served by the cell in question, i.e. by closing down programs/ applications, by increasing distance and/ or decrease speed when the UE is integrated in a vehicle, etc., in a controlled manner which avoids abrupt sudden shutdowns.

In a fifth possible implementation of the method according to the second aspect, or any implementation thereof, the method may also comprise receiving flight path information of the UE. Also, the method may comprise determining cells along the flight path. The method may in addition comprise determining the QoS for the communication session of the UE based at least partly on the received information concerning slice status of the determined cells along the flight path and the received information concerning required slice support of the communication session of the UE.

By acquiring information concerning flight path, cells along the flight path and slice status of the cells along the flight path, the prediction function network node is enabled to determine QoS of different cells along the flight path and predict QoS for the UE when arriving at these cells when passing along the flight path. Thereby, a better determination of QoS may be made, which is relevant for the UE.

In a sixth possible implementation of the method according to the second aspect, or any implementation thereof, the method may also comprise receiving a threshold limit for each QoS parameter making up a currently supported QoS profile of a QoS flow belonging to a PDU session in question, based on Vehicle to Everything (V2X) application requirement, from an Access and Mobility Management Function, SMF or PCF or AF directly. The method also comprises estimating the Quality of Service parameter. The method also comprises comparing the received threshold limit with the estimated QoS parameter. Furthermore, the method may also comprise transmitting an alert to the UE when the estimated QoS parameter has a value outside the received threshold limit of that parameter.

By comparing the predicted QoS parameter of the UE with the threshold limit, a deteriorated QoS of the UE could be predicted, and a warning sent to the UE that the QoS is going to change. At the UE, appropriate measures could then be taken.

According to a third aspect, not covered by the invention, a network node is provided. The network node is configured to receive a request for information concerning slice status of a cell, from a prediction function network node. Further, the network node is configured to provide the requested information concerning slice status of the cell, to the prediction function network node, wherein the provided information forms a support for enabling the prediction function network node to determine QoS of a communication session of a UE served by the cell.

By providing slice status of the cell to the prediction function network node upon request, the prediction function network node acquire information required for determining or at least roughly estimating QoS of UEs served by the cell in question.

In a first possible implementation of the network node according to the third aspect, the network node may be further configured to receive a request comprising a periodicity for the network node to report the information concerning slice status of the cell, to the prediction function network node.

By obtaining a periodicity of how often the slice status of the cell is to be reported/ updated, it is ascertained that the prediction function network node is continuously provided with information concerning slice status of the cell.

In a second possible implementation of the network node according to the third aspect, or the first implementation thereof, the network node may be further configured to obtain information concerning required slice support of the communication session of the UE. The network node may also be configured to provide the obtained information to the prediction function network node.

By obtaining information about required slice support of the communication session of the UE and provide this information to the prediction function network node, the prediction function network node may compare the required slice support of the UE with the previously obtained slice status of cells in the network and detect a match, or mismatch, respectively. Thereby, a change in QoS for the communication session of the UE may be detected, given the capabilities and current load of the target serving cell.

According to a fourth aspect, a method in a network node is provided. The method comprises receiving a request for information concerning capabilities of a cell, from a prediction function network node. Further, the method comprises providing the requested information concerning capabilities of the cell, to the prediction function network node, wherein the provided information forms a support for enabling the prediction function network node to determine QoS of a communication session of a UE served by the cell.

By providing slice status of the cell to the prediction function network node upon request, the prediction function network node acquire information required for determining or at least roughly estimating QoS of UEs served by the cell in question.

In a first possible implementation of the method according to the fourth aspect, the method may also comprise receiving a request comprising a periodicity for the network node to report the information concerning slice status of the cell, to the prediction function network node.

By obtaining a periodicity of how often the slice status of the cell is to be reported/ updated, it is ascertained that the prediction function network node is continuously provided with information concerning slice status of the cell.

In a second possible implementation of the method according to the fourth aspect, or the first implementation thereof, the method may further comprise obtaining information concerning required slice support of the communication session of the UE. Further, the method may also comprise providing the obtained information to the prediction function network node.

By obtaining information about required slice support of the communication session of the UE and provide this information to the prediction function network node, the prediction function network node may compare the required slice support of the UE with the previously obtained slice status of cells in the network and detect a match, or mismatch, respectively. Thereby, a change in QoS for the communication session of the UE may be detected, given the capabilities and current load of the target serving cell.

According to a fifth aspect, not covered by the invention, a UE is provided. The UE is configured to provide information concerning required slice support of a communication session of the UE, to a prediction function network node. Further, the UE is configured to receive information concerning QoS of the communication session of the UE, as determined by the prediction function network node.

By providing information concerning required slice support of a communication session of the UE to the prediction function network node, the prediction function network node is enabled to compare those requirements with available slice support of the cell, the prediction function network node acquire information required for determine or at least roughly estimate QoS of UEs served by the cell in question. By receiving information concerning the QoS from the prediction function network node, the UE is pre-warned and may adapt to the predicted QoS already before arriving to an area served by the cell in question, i.e. by closing down programs/ applications, by increasing distance and/ or decrease speed when the UE is integrated in a vehicle, etc., in a controlled manner which avoids abrupt sudden shutdowns.

In a first possible implementation of the UE according to the fifth aspect, the UE may be further configured to provide flight path information of the UE, to the prediction function network node.

By extracting flight path information from a navigator or navigation app associated with the UE, and providing the flight path information to the prediction function network node, the prediction function network node is enabled to determine cells along the flight path and slice status of the cells along the flight path, and thereby also determine QoS of different cells along the flight path and predict QoS for the UE when arriving at these cells when passing along the flight path. Thereby, a better determination of QoS may be made, which is relevant for the UE.

According to a sixth aspect, a method in a UE is provided. The method comprises providing information concerning required slice support of a communication session of the UE, to a prediction function network node. Further, the method comprises receiving information concerning QoS of the communication session of the UE, as determined by the prediction function network node at least based on obtained residual capacity per required slice per cell along the user equipment trajectory, and a current load per required slice per cell along the user equipment trajectory.

By providing information concerning required slice support of a communication session of the UE to the prediction function network node, the prediction function network node is enabled to compare those requirements with available slice support of the cell, the prediction function network node acquire information required for determining or at least roughly estimating QoS of UEs served by the cell in question. By receiving information concerning the QoS from the prediction function network node, the UE is pre-warned and may adapt to the predicted QoS already before arriving to an area served by the cell in question, i.e. by closing down programs/ applications, by increasing distance and/ or decreasing speed when the UE is integrated in a vehicle, etc., in a controlled manner which avoids abrupt sudden shutdowns.

In a first possible implementation of the method according to the sixth aspect, the method may comprise providing flight path information of the UE, to the prediction function network node.

By extracting flight path information from a navigator or navigation app associated with the UE, and providing the flight path information to the prediction function network node, the prediction function network node is enabled to determine cells along the flight path and slice status of the cells along the flight path, and thereby also determine QoS of different cells along the flight path and predict QoS for the UE when arriving at these cells when passing along the flight path. Thereby, a better determination of QoS may be made, which is relevant for the UE.

According to a seventh aspect, a computer program is provided, with a program code for performing a method according to the second aspect in a prediction function network node according to the first aspect, a method according to the fourth aspect in a network node according to the third aspect, or a method according to the sixth aspect in a UE according to the fifth aspect when the computer program runs on a computer.

By requesting and acquiring information concerning slice status of cells, a mechanism is provided to notify the prediction function network node concerning the slice status of the cell. Thereby, also QoS of UEs served by the cell in question may be determined or at least roughly estimated.

Other objects, advantages and novel features of the aspects of the invention will become apparent from the following detailed description.

### BRIEF DESCRIPTION OF THE DRAWINGS

Various embodiments are described in more detail with reference to attached drawings, illustrating examples of embodiments of the invention in which:
- **Figure 1**: is a block diagram illustrating a wireless communication network according to an example, and a UE moving along a flight path.
- **Figure 2**: is a combined flow chart and signalling scheme in a wireless communication network according to an example.
- **Figure 3**: is a combined flow chart and signalling scheme in a wireless communication network according to an example.
- **Figure 4**: is a combined flow chart and signalling scheme in a wireless communication network according to an example.
- **Figure 5**: is a combined flow chart and signalling scheme in a wireless communication network according to an example.
- **Figure 6**: is a flow chart illustrating a method in a prediction function network node according to an example.
- **Figure 7**: is a flow chart illustrating a method in a network node according to an example.
- **Figure 8**: is a flow chart illustrating a method in a UE according to an example.
- **Figure 9**: is a block diagram illustrating a prediction function network node according to an example.

### DETAILED DESCRIPTION

Embodiments of the invention described herein are defined as a network node, a prediction function network node, a user equipment and methods therein, which may be put into practice in the embodiments described below. These embodiments may, however, be exemplified and realised in many different forms and are not to be limited to the examples set forth herein; rather, these illustrative examples of embodiments are provided so that this disclosure will be thorough and complete.

Still other objects and features may become apparent from the following detailed description, considered in conjunction with the accompanying drawings. It is to be understood, however, that the drawings are designed solely for purposes of illustration and not as a definition of the limits of the herein disclosed embodiments, for which reference is to be made to the appended claims. Further, the drawings are not necessarily drawn to scale and, unless otherwise indicated, they are merely intended to conceptually illustrate the structures and procedures described herein.

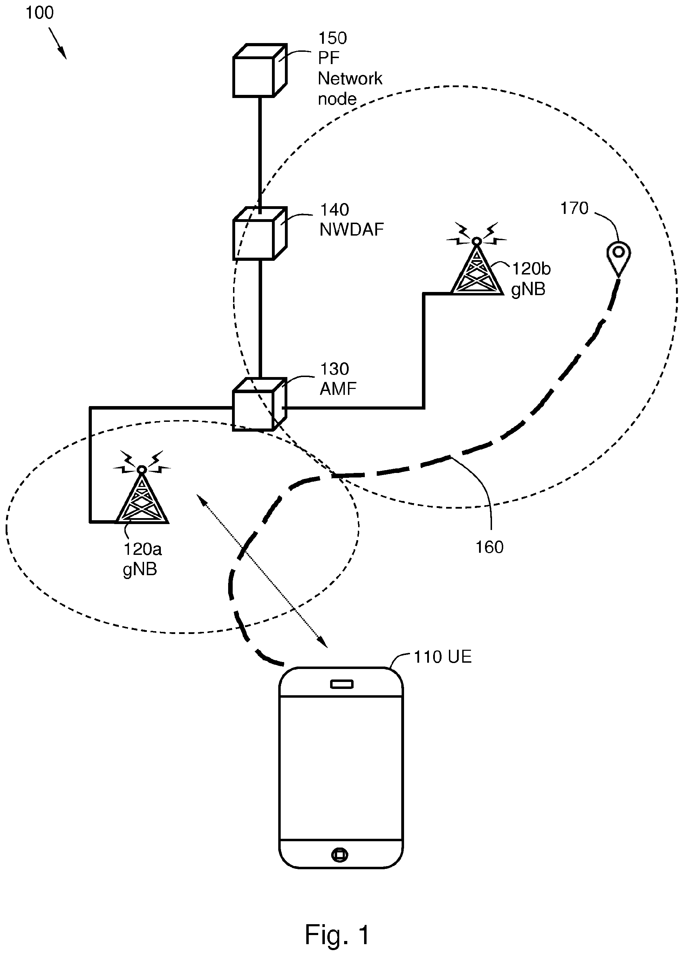

**Figure 1** is a schematic illustration over a wireless communication network **100** comprising a User Equipment (UE) **110,** for communication of signals, data and/ or data packets over a wireless communication interface. The wireless communication network 100 may be a 5th Generation (5G) network, or any network supporting the concept of network slicing.

The expressions "wireless communication network", "wireless communication system" and/ or "cellular telecommunication system" may within the technological context of this disclosure sometimes be utilised interchangeably.

The UE 110 may be moving, e.g. when situated in a vehicle, along a flight path **160** towards a destination **170.** The UE 110 may for example comprise an integrated communication device of a vehicle, e.g. configured for Vehicle-to-Vehicle/ Vehicle-to-Everything (V2V/ V2X) communication with other vehicles, or other environmental structures. However, in other embodiments, the UE 110 may be a cellular mobile telephone or similar communication device, used by a user which is moving on a vehicle such as a train or an autonomous car, etc.

When moving between different locations, the UE 110 may have to make a hand over from a source serving cell **120a,** to a target serving cell **120b.** Information concerning the UE 110 and/ or the target serving cell 120b may be provided to a prediction function network node **150.** The prediction function network node 150 is configured to perform a prediction function concerning a change in Quality of Service (QoS) associated with a Packet Data Unit (PDU) Session of the UE 110.

The wireless communication network 100 may also comprise an Access and Mobility Management Function (AMF) network node/ Session Management Function (SMF) network node **130;** a PCF with which an Application Function negotiates and configures support of multiple QoS profiles per QoS flow belonging to a related PDU session and threshold of each QoS parameter of each supported QoS profile - if a threshold is passed a IQN will be generated, and a Network Data Analytics Function node (NWDAF) **140.** The NWDAF 140 may be responsible for providing network analytic information upon request to the prediction function network node 150. For example, the prediction function network node 150 may request specific analytic information on the load level of a particular network slice. Alternatively, the prediction function network node 150 may use a subscription service to ensure that it is notified by the NWDAF 140 if the load level of a network slice changes or reaches a specific threshold, in some embodiments.

The source cell 120a, the target cell 120b, the AMF network node 130 and/ or the NWDAF 140 may all be referred to as network nodes 120a, 120b, 130, 140 in a common term.

An ability of the cellular network 100 to provide required QoS to the UE 110 mainly depends at least on whether the respective cells 120a, 120b supports one or more slices that a particular PDU Session of the UE 110 served by that cell 120a, 120b in question uses. In addition, in order for the prediction function network node 150 to make PDU Session specific predictions, it would be desired to develop a network functionality for collecting slices that the particular PDU Session in question requires, current location and trajectory information of the UE 110, slice availability at cells 120a, 120b along the trajectory 160 of the UE 110, residual capacity per required slice per cell 120a, 120b along the UE trajectory 160, and the current load per required slice per cell 120a, 120b along the UE trajectory 160.

A mechanism is in some embodiments provided to notify the prediction function network node 150 about slices a PDU Session of the UE 110 in question uses and Slice availability along trajectory of the UE 110, and the objectives may comprise to ensure how the prediction function network node 150 becomes aware of capabilities of cells 120a, 120b located along the UE trajectory/ flight path 160, especially in terms of Slice Support the UE 110 is currently using/ allocated, Radio Access Technology (RAT) type, frequency of operations (as some slices will be on certain frequency ranges), Carrier Aggregation (CA), Dual Connectivity (DC) and Coordinated Multipoint (COMP) Support, etc.

A flight path information consists of a number of waypoints defined as 3D locations as defined in 3GPP TS 36.355. The UE 110 may report up to a configured number of waypoints if flight path information is available at the UE 110. The report can consist also time stamps per waypoint if configured in the request and if available at the UE 110.

Information concerning UE-specific Slice Support required, UE current location and trajectory information and Registration Area may be provided to the prediction function network node 150.

The prediction function network node 150 may be requested to predict any QoS change associated with the PDU Session of the UE 110. In fact, the prediction function network node 150 may predict to see if each QoS parameter associated/ defined with the currently supported QoS profile of a QoS flow belonging to a PDU session in question has passed threshold(s) associated with that QoS parameter - if passed, an IQN may be generated. Normally an IQN may be generated per QoS flow - but in some occasions (e.g., when there is coverage holes), an IQN can be generated per a PDU session.

For making the prediction, the prediction function network node 150 may require various information related to the UE 110 and/ or the trajectory 160 of the UE 110, such as e.g. current UE location, UE trajectory information, Slices required by the particular PDU Session in question and slice availability of the cells 120a, 120b along the trajectory 160 of the UE 110 for example.

The UE 110 can indicate to the network nodes 120a, 120b, 130, 140 and/ or the prediction function network node 150 as to whether the UE 110 require Predictive QoS (P-QoS) support explicitly part of either a Registration Request or a PDU Session Establishment Request. Alternatively, the network nodes 120a, 120b, 130, 140 and/ or the prediction function network node 150 may use subscription data held in User Data Management/ Policy Control Function (UDM/ PCF) to decide whether P-QoS needs to be supported for particular PDU Sessions initiated by the UE 110.

Slicing and the collection of slice specific information in the context of P-QoS for predicting QoS in a given geographical area is not previously known. It would be desired to be able to predict QoS for the PDU Session of the UE 110, e.g. when moving along the trajectory 160 between different cells 120a, 120b, using knowledge concerning slice status of cells 120a, 120b along the UE trajectory 160 and/ or required slice support of the UE PDU Session, perhaps in particular in a scenario wherein the UE 110 is moving fast between cells 120a, 120b.

Accordingly, when the network 100 determines that a P-QoS is to be supported, the prediction function network node 150 may be notified by the AMF/ SMF 130 and the prediction function network node 150 in turn may collect details of Slices (e.g., Network Slice Selection Assistance Information (S-NSSAI) that are required by the particular PDU Session and Session ID right after a PDU Session is established. In addition, the prediction function network node 150 may collect current location and trajectory path 160 of the UE 110 by contacting a V2X Application running in the UE 110 or Application Server. Alternatively, the prediction function network node 150 can collect UE location and trajectory information from AMF 130, SMF or NWDAF 140. The prediction function network node 150 may subsequently, map cells 120a, 120b that are located along the trajectory 160 of the UE 110 and determine whether the slices the UE 110 currently is interested in are available along the UE trajectory 160. In case, required slices are available, the prediction function network node 150 may check current load and residual capacity of each of the interested slices to determine whether QoS associated with the PDU Session in question will be impacted. If interested slices are not available or in case there is no enough residual capacity for interested slices along a trajectory 160 of the UE 110, the prediction function network node 150 may notify/ warn the UE 110 in advance.

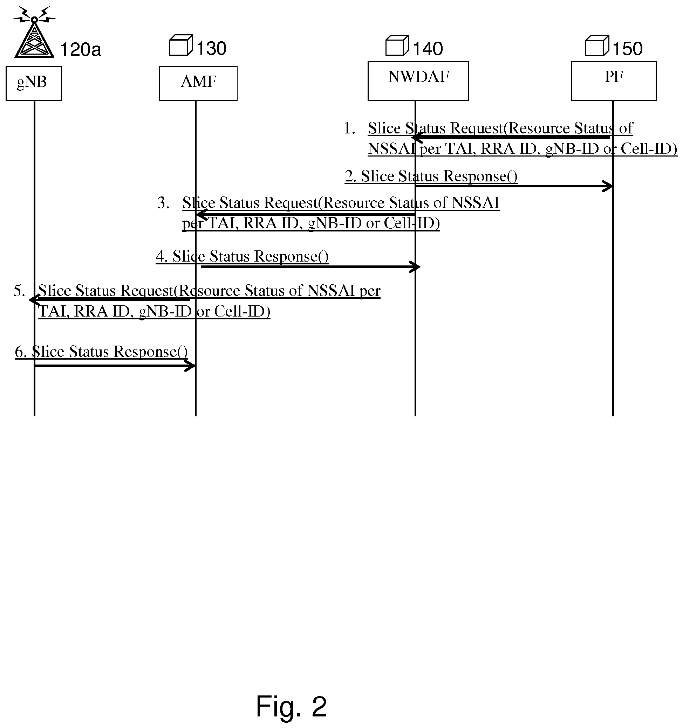

According to some embodiments, a new Slice Status Reporting Initiation procedure may be introduced. As depicted in **Figure 2****,** a prediction function network node 150 may initiate Slice Resource Status Reporting Initiation procedure to request NWDAF 140 to periodically update Slice Resource Status per Tracking Area, Radio Access Network (RAN) Registration Area, gNB ID or cell-ID. Accordingly, in Step 1, the prediction function network node 150 may trigger Slice Status Request towards an NWDAF 140 while enquiring Slice Resource Status per NSSAI per Tracking Area (TA), RRA, Next Generation NodeB (gNB) and/ or cell 120a, 120b. On receipt of it, in Step 2 the NWDAF 140 checks the Reporting Periodicity IE included in a SLICE STATUS REQUEST message and may use its value as the time interval between two subsequent SLICE STATUS UPDATE messages that comprise e.g. the Slice Resource Status IE (e.g., radio resource), N3 TNL Load Indicator IE, Hardware Load Indicator IE, Composite Available Capacity Group IE. The NWDAF 140 may respond either positively with Slice Status Response or negatively with Slice Status Failure message. In Step 3, the NWDAF 140 may check the TA covered by different AMFs 140 and sends Slice Status Request with appropriate TAI, RRA ID, gNB-ID, Cell-ID. In Step 4, the AMF 140 may check Reporting Periodicity IE comprised in the SLICE STATUS REQUEST message and may use its value as the time interval between two subsequent SLICE STATUS UPDATE messages. The AMF 140 may respond either positively with Slice Status Response, or negatively with Slice Status Failure message.

In Step 5, the AMF 140 may send a Slice Status Request with appropriate gNB ID or Cell ID. In Step 6, the gNB 120a may respond either positively with Slice Status Response with the Reporting Periodicity IE comprised in the SLICE STATUS REQUEST message or negatively with Slice Status Failure message.

Although not shown in Figure 2, it is also possible that the prediction function network node 150 can contact directly with the gNB 120a for the purpose of collecting slice specific information per cell or TA; thus, by-passing the AMF 130 and/ or the NWDAF 140 or can interact with both the AMF 130 and/ or the NWDAF 140 simultaneously. Alternatively, the prediction function network node 150 may request additionally cell capabilities in terms of RAT type, frequency range used, Support of technologies namely CA, DC and COMP in order to figure out slice support.

Slice Status Reporting Initiation procedure is used by the prediction function network node 150 to request each gNB 120a to report load measurements related to each slice. The procedure uses non UE-associated signalling. The procedure may be initiated with a SLICE STATUS REQUEST message sent from the prediction function network node 150 targeting ultimately the gNB 120a. Upon receipt, the gNB 120a may initiate the requested measurement according to the parameters given in the request in case the Reporting Request IE set to "start". Further, the gNB 120a may stop all cell measurements and terminate the reporting in case the Reporting Request IE is set to "stop". In addition, the gNB 120a, if supported, may stop cell measurements and terminate the reporting for cells indicated in the Cell To Report IE list, in case the Reporting Request IE is set to "partial stop". Also, or alternatively if supported, add cells indicated in the Cell To Report IE list to the measurements initiated before for the given measurement IDs, in case the Reporting Request IE is set to "add".

If the gNB 120a receives a SLICE STATUS REQUEST message, which comprises the Reporting Request IE set to "stop", the Cell To Report IE list may be ignored.

If the Reporting Request IE is set to "start" then the Report Characteristics IE may be comprised in SLICE STATUS REQUEST message. The gNB 120a may ignore the Report Characteristics IE, if the Reporting Request IE is not set to "start".

The Report Characteristics IE may indicate the type of objects that the gNB 120a may perform measurements on. For each cell, the gNB 120a may provide various information in the SLICE STATUS UPDATE message such as e.g. the Slice Resource Status IE, if the first bit, "PRB Periodic" of the Report Characteristics IE comprised in the SLICE STATUS REQUEST message is set to 1. Further, the gNB 120a may provide N3 TNL Load Indicator IE, if the second bit, "TNL Load Ind Periodic" of the Report Characteristics IE comprised in the SLICE STATUS REQUEST message is set to 1. Also, the gNB 120a may provide the Hardware Load Indicator IE, if the third bit, "HW Load Ind Periodic" of the Report Characteristics IE comprised in the SLICE STATUS REQUEST message is set to 1. In addition, or alternatively, the gNB 120a may provide the Composite Available Capacity Group IE, if the fourth bit, "Composite Available Capacity Periodic" of the Report Characteristics IE comprised in the SLICE STATUS REQUEST message is set to 1. If Cell Capacity Class Value IE is comprised within the Composite Available Capacity Group IE, this IE may be used to assign weights to the available capacity indicated in the Capacity Value IE.

If the Reporting Periodicity IE is comprised in the SLICE STATUS REQUEST message, the gNB 120a may use its value as the time interval between two subsequent SLICE STATUS UPDATE messages that comprise the Slice Resource Status IE, N3 TNL Load Indicator IE, Hardware Load Indicator IE, Composite Available Capacity Group IE, and/ or ABS Status IE.

If the gNB 120a is capable to provide all requested resource status information, it shall initiate the measurement as requested by the prediction function network node 150 and may respond with the SLICE STATUS RESPONSE message.

If the gNB 120a is capable to provide some but not all of the requested resource status information and the Partial Success Indicator IE is present in the SLICE STATUS REQUEST message, it may initiate the measurement for the admitted measurement objects and include the Measurement Initiation Result IE in the SLICE STATUS RESPONSE message according to some embodiments. All measurements may be made per NSSAI per cell 120a per TA.

If, on the other hand, none of the requested measurements can be initiated, the gNB 120a may send a SLICE STATUS FAILURE message. The Cause IE may be set to an appropriate value e.g. "Measurement Temporarily not Available" or "Measurement not Supported For The Object" for each requested measurement object. The eNB 120a may use the Complete Failure Cause Information IE to enhance the failure cause information per measurement in the SLICE STATUS FAILURE message.

If the initiating prediction function network node 150 does not receive either SLICE STATUS RESPONSE message or SLICE STATUS FAILURE message, the prediction function network node 150 may reinitiate the Slice Status Reporting Initiation procedure towards the same gNB 120a, provided that the content of the new SLICE STATUS REQUEST message is identical to the content of the previously unacknowledged SLICE STATUS REQUEST message.

Slice Status Reporting procedure may be initiated by the gNB 120a to report the result of measurements admitted by the gNB 120a following a successful Slice Status Reporting Initiation procedure. The procedure may use non UE-associated signalling.

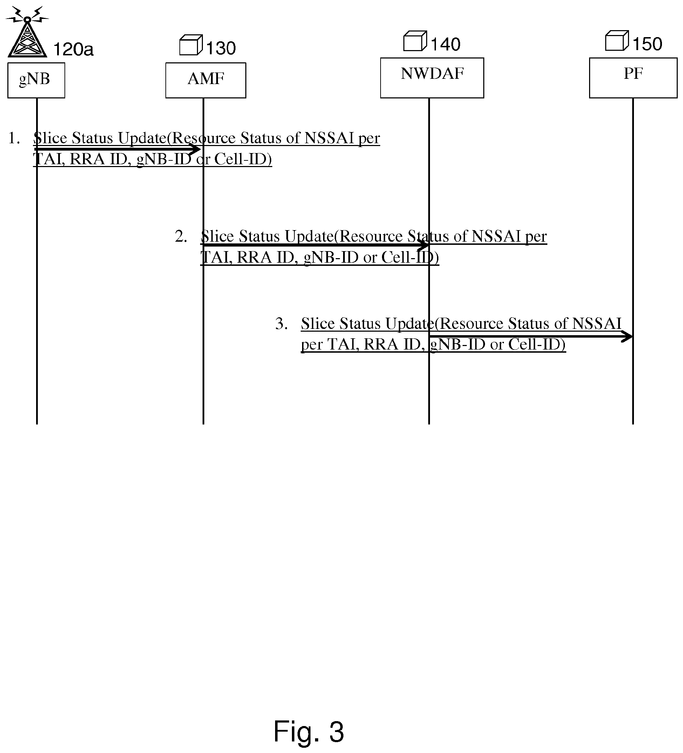

As depicted in **Figure 3****,** the gNB 120a may report the results of the admitted measurements in SLICE STATUS UPDATE message. The admitted measurements may be the measurements that were successfully initiated during the preceding Slice Status Reporting Initiation procedure, and thus not reported in the Measurement Failed Report Characteristics IE for the concerned cell in the SLICE STATUS RESPONSE message.

The Hardware Load Indicator IE may indicate the status of the Hardware Load experienced per cell per NSSAI. The N3 TNL Load Indicator IE indicates the status of the N3 Transport Network Load experienced per cell per NSSAI. The Load Indicator IE indicates the status of Load (LowLoad, MediumLoad, HighLoad, Overload) per cell per NSSAI. The Slice Resource Status IE may indicate the usage of the PRBs for all traffic in Downlink and Uplink (TS 36.314, TS 23.203) and the usage of PDCCH CCEs for Downlink and Uplink scheduling per NSSAI. The Composite Available Capacity Group IE may indicate the overall available resource level in the cell in Downlink and Uplink per NSSAI. Cells can report capabilities in terms of RAT type used, frequency ranges supported whether CA, DC, COMP can be supported.

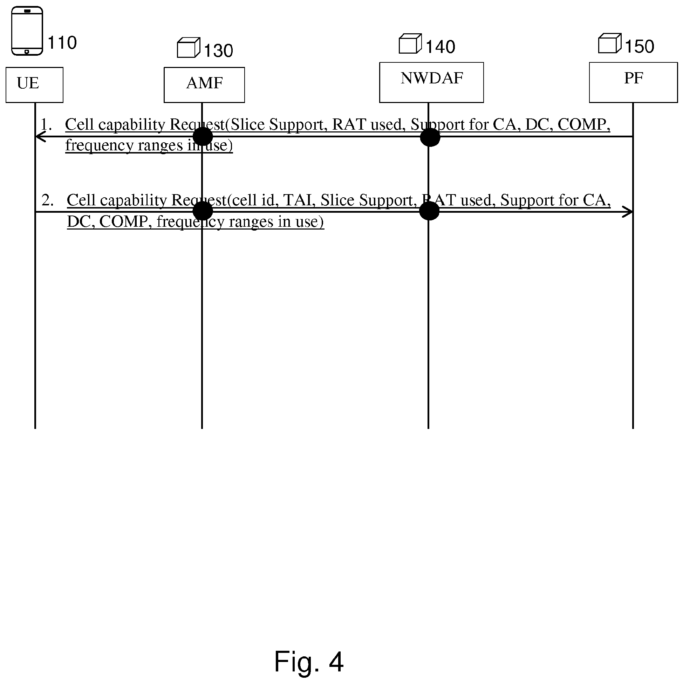

According to another arrangement, a UE 110 may gather cell capability information in terms of Slice Support, frequency ranges and RAT type used, Support for CA, DC, COMP, etc., and pass it on to the prediction function network node 150. This is depicted in **Figure 4****.**

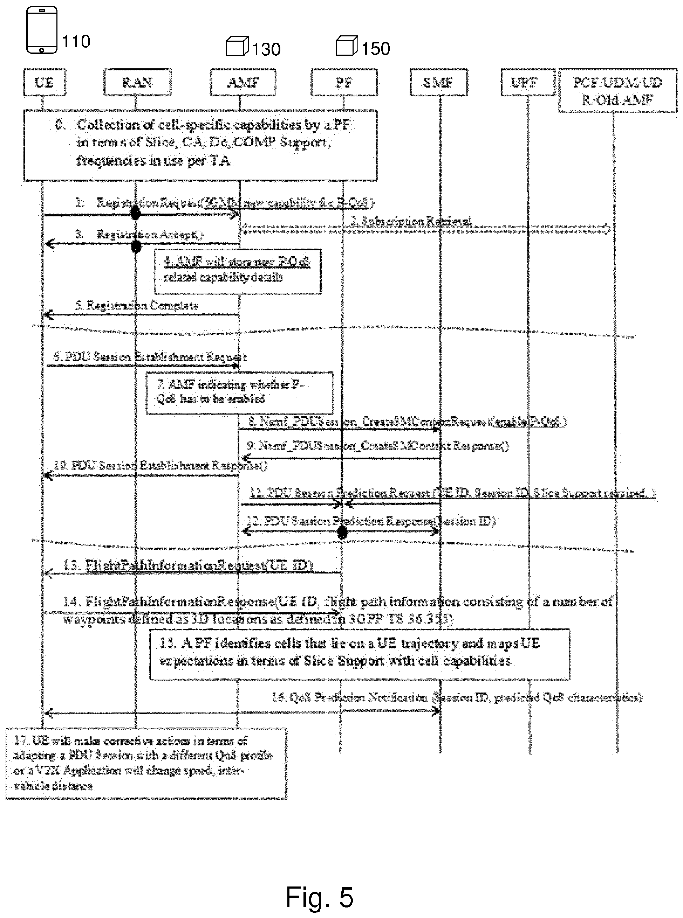

In order to address the second problem previously discussed, once the PDU Session is established, the prediction function network node 150 may be notified by the AMF 130, or an SMF, as to whether a particular PDU Session in question requires P-QoS support. The AMF 130 or SMF can further pass on details of UE ID, Session ID, Slices (e.g., NSSAI) used by a given PDU Session in question, UE-specific Registration Area. The associated message sequence flow is depicted in **Figure 5****.**

With procedures as explained in relation to Figures 2-4, in Step 0, the prediction function network node 150 may collect cell specific capability information in terms of namely Slice (S-NSSAI), CA, DC and/ or COMP support. This step 0 may be non-UE-specific signalling and hence it is a common procedure (i.e., not UE-Specific dedicated procedure). After a UE registration, it may be assumed that a PDU Session is established with P-QoS Support and hence Steps 1-10 may already have been performed.

In Step 11; when the AMF 130/ SMF initiates PDUSessionPredictionRequest to the prediction function network node 150, it may notify a UE Specific Slices Support required, tenant id, Registration Area, Hand Over (HO) Restriction List, UE History to the prediction function network node 150. In addition, the AMF 130/ SMF may further indicate as part of Step 11 as to when a QoS Change Prediction has to be generated in terms of thresholds. In other words, based on a particular V2X application running on the UE specific configuration as made according to application specific PCC rules. Alternatively, application-specific threshold configuration can be passed on to the prediction function network node 150 by the UE 110 in step 14. The AMF 130/ SMF may pass Slice Specific information on to the prediction function network node 150 using Step 11 only when Predictive QoS needs to be supported to a particular PDU Session or the UE 110.

Information about Allocated Slices pertaining to established PDU Sessions for which P-QoS is required may be notified to the prediction function network node 150 together with e.g. UE ID, Session ID, UE-specific Handover Restriction list, UE Registration Area, UE History information as defined in TS 38.300 and TS 38.413, and tenant ID. On knowing that a specific PDU Session requires P-QoS support, the prediction function network node 150 may in turn request the UE 110 to report its flight path 160 in step 13. In return the UE 110 may report its flight path 160 information comprising a number of waypoints e.g. as 3D locations as defined in 3GPP TS 36.355 together with its current instantaneous location in terms of either an identity of a currently serving cell 120a (i.e., cell ID) or GPS coordinates. The UE 110 may report up to configured number of waypoints if flight path information is available at the UE 110. The report occurring in Step 14 may comprise also time stamps per waypoint if configured in the request and if available at the UE 110.

Accordingly, the prediction function network node 150 may gather capabilities of each cell per Tracking Area (TA) in terms of Slice Support (e.g., Identified through S-NSSAI), frequency ranges in use, RAT type used, Support of CA, DC, COMP Access as well periodic load and residual capacity of each slice per cell.

With a knowledge of cell specific capability information in terms of slice, CA, DC and COMP support and UE-specific slice support required per each established PDU session and trajectory or flight path information, the prediction function network node 150 in step 15 can map each UE-specific flight path way point to one or more cells and check whether those cells can satisfy QoS requirements demanded by a PDU Session established by the UE 110 in question. As part of this process, the prediction function network node 150 can check whether those mapped cells can support one or many slices required by a currently established PDU session of the UE 110 in question. It may be assumed that the prediction function network node 150 knows geographic coordinates of each cell coverage of a PLMN in order to map a UE specific way point as indicted in the flight path 160 reporting to the cell. Although a given waypoint can be served by more than one cell, UE-specific Registration Area, Handover Restriction list, UE history information and cell-specific load per slice (both instantaneous and history with time stamps) can be helpful for the prediction function network node 150 to decide as to which cells 120a, 120b that may serve the UE 110. After determining those cells 120a, 120b that are predicted to potentially serve the UE 110 in question, in case one of those mapped cells 120a, 120b does not support a Slice, the prediction function network node 150 will generate an In-advance QoS Notification (IQN) in step 16 indicating to the UE 110 or SMF in terms of time instances at which QoS associated with different QoS flows of the PDU Session will get impacted. These time instances may be supplied by the UE 110 as part of flight path reporting that the prediction function network node 150 may use to determine as to which cells 120a, 120b the UE 110 will be served at a particular time instance.

On the other hand, if the prediction function network node 150 in step 15 determines that one or many slices required by the established PDU Session of the UE 110 are available in the cell 120a that is predicted to serve the UE 110 at a given time instance but that the cell 120a is predicted to not have enough residual capacity per one or more slices that the UE 110 is interested in, the prediction function network node 150 may further calculate by how much QoS associated with each QoS flow is predicted to be impacted. Suppose a QoS flow requires a minimum data rate of 10 Mbps and based on a threshold configuration passed on to the prediction function network node 150 by either an AMF 130/ SMF/ PCF or the AF/ UE 110 in question in step 11 or step 14 respectively, it is assumed that the prediction function network node 150 has to generate an IQN when a data rate drops by 10%, the prediction function network node 150 may generate an IQN when any cell 120a, 120b along the trajectory 160 can support less than 9 Mbps. Such threshold configuration can be made per data rate, packet delay budget, packet error rate or each QoS parameter defining a currently supported QoS profile per QoS flow in different embodiments.

The following step sequence describes as to how collected information is used to make PDU Session specific predictions; please follow steps as described in relation to Figure 5.

Step 0: the prediction function network node 150 collects cell specific information in terms of e.g. slice, CA, DC, COMP support, frequency ranges in use and cell load and residual capacity per slice per TA.

Step 1: when a PDU Session is established by the UE 110, the AMF 130/ SMF may check whether predictive QoS (P-QoS) needs to be supported to that Session based on UE input parameters (e.g., P-QoS flag as indicated in 5GSM or 5GMM) or UDM/ PCF held Subscription data. If P-QoS needs to be supported, the AMF 130/ SMF may notify the prediction function network node 150 regarding e.g. UE ID, Session ID and Slice Support required along with threshold configuration as expected by a specific V2X application. Additionally, a UE specific Handover Restriction list, History Information, UE Registration Area can be passed on to the prediction function network node 150 by the AMF 130/ SMF.

Step 3: the prediction function network node 150 may request the UE 110 to report its current instantaneous location and its intended flight path information along with time instances as indicated by step 13 of Figure 5 and the UE 110 may make such a reporting in step 14.

Step 4: this is analogous to step 15 of Figure 5. The prediction function network node 150 may collect UE-Specific periodic location, speed and trajectory information either from the UE 110 and Application Function (AF) and based on which the prediction function network node 150 may determine cells 120a, 120b that lie on the intended trajectory 160 of the UE 110 in question and figure out whether currently required Slices are available in those cells 120a, 120b and whether those Slices will have enough residual capacity to accommodate the already established PDU Session. The prediction function network node 150 may keep history data of each Slice running in each cell 120a, 120b in terms of its residual capacity at periodic time instance per day that may be helpful in making predictions. Also, it is assumed that the prediction function network node 150 knows cell coverage geography and based on UE input flight path waypoint, the prediction function network node 150 can determine which cells 120a, 120b are predicted to serve the UE 110 in question. In other words, the prediction function network node 150 will map the UE specific flight path way points to different cells 120a, 120b and determine whether those mapped cells 120a, 120b can meet QoS requirements of an established PDU Session. As mentioned above, a single way point can be served by more than one cell 120a, 120b - but based on UE history information, handover restriction list and Registration Area along with cell load and residual capacity per slice, it is possible for the prediction function network node 150 to predict which cells 120a, 120b can serve the UE 110 in question as it moves along its intended flight path 160.

Step 5: If a cell 120a, 120b that lies on the UE trajectory 160 does not support a required Slice or is predicted to have insufficient residual capacity or does not employ a particular technique such as CA, DC or COMP that may be required to support the QoS of the PDU Session, the prediction function network node 150 may notify or pre-warn the UE 110 with an IQN. In case a QoS parameter passes a threshold (e.g., 10% degradation of currently supported data rate) as configured through PCC per V2X application, an IQN may be generated. Generation of IQN considers whether any of those cells 120a, 120b that are located along the flight path 160 supports one or many of those slices the UE 110 is currently interested in or if supported, whether they have enough residual capacity each, if not, the prediction function network node 150 may determine as to when and where QoS of the established PDU Session in question is predicted to be impacted.

Thereby, thanks to embodiments of the provided solution, a new Slice Status update procedure triggered by the prediction function network node 150 for each gNB 120a, 120b to update Slice Status in terms of current load and residual capacity per cell per gNB per TA. Further, a new Slice Status update procedure for the AMF 130 to update the NWDAF 140 is provided. Also, a new Slice Status update procedure is provided, for the NWDAF 140 to update the prediction function network node 150. In addition, a new mechanism for the AMF 130 to indicate UE-Specific Slice Support and Registration Area to the prediction function network node 150.

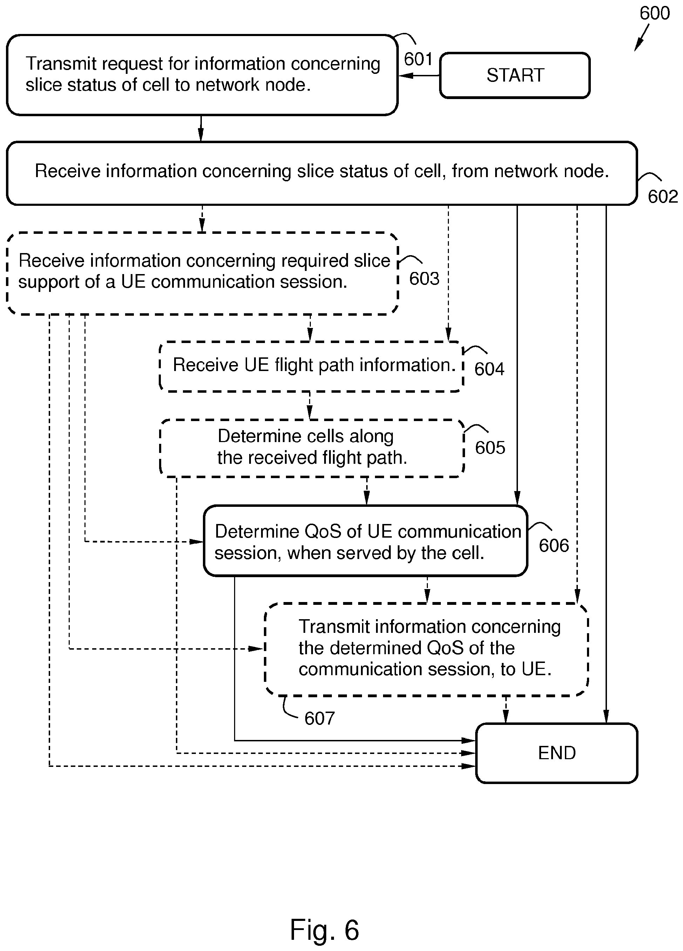

**Figure** 6 is a flow chart illustrating embodiments of a method 600 in a prediction function network node 150 for obtaining information which forms a support for making QoS predictions for a UE 110 appearing in a cell 120a, 120b.

In order to correctly obtaining the information, the method 600 may comprise a number of steps 601-607. However, some of these steps 601-607 may be performed solely in some alternative embodiments, like e.g. steps 603-605 and/ or 607. Further, the described steps 601-607 may be performed in a somewhat different chronological order than the numbering suggests. The method 600 may comprise the subsequent steps:
**Step 601** comprises transmitting a request for information concerning slice status of a cell 120a, 120b, to a network node 120a, 120b, 130, 140.

The network node 120a, 120b, 130, 140 may comprise e.g. a gNB 120a, 120b, an AMF 130, and/ or a NWDAF 140.

The transmitted request may comprise a reporting periodicity for the network node 120a, 120b, 130, 140 to report the information concerning slice status of the cell 120a, 120b.

The requested information may comprise e.g. serving cell information, serving cell capability in terms of Slice Support, Network Slice Selection Assistance Information per Tracking Area Identity, Radio Access Technology, frequency in use, current load and residual capacity per slice, local weather, past history of Signal to Noise Plus Interference Ratio (SNIR) measurements, support of Carrier Aggregation, support of Dual Connectivity, and/ or support of Coordinated Multi-Point Access, location of the UE 110, flightpath of the UE 110.

The Slice Status Request may be sent to an NWDAF 140 in some embodiments, enquiring e.g. Slice Resource Status per NSSAI per TA, RRA, gNB or cell, in some embodiments.

**Step 602** comprises receiving the requested information concerning slice status of the cell 120a, 120b, from the network node 120a, 120b, 130, 140.

The received information may comprise either Slice Status Response with the requested information, or a Slice Status Failure message when the requested information cannot be provided.

**Step 603,** which may not necessarily be performed in all embodiments, comprises receiving information concerning required slice support of the communication session of the UE 110.

**Step 604,** which may not necessarily be performed in all embodiments, comprises receiving flight path information of the UE 110.

The flight path information of the UE 110 may be extracted from a navigator of a vehicle associated with the UE 110, wherein the navigation path 160 to the target destination 170 is stored. Alternatively, the flight path information may be extracted from a navigation app of the UE 110.

The flight path 160 of the UE 110 may be provided in form of geographical coordinates, or in terms of a road for example along with future time references for future waypoints meaning that a current location may be referenced with a current time.

**Step 605,** which may not necessarily be performed in all embodiments, comprises determining cells 120a, 120b along the flight path 160.

The prediction function network node 150 may determine, i.e. localise the cells 120a, 120b by consulting a database, using the flight path 160 as input values.

**Step 606** comprises determining QoS of the communication session of the UE 110 served by the cell 120a, 120b, based on the received 602 information.

The QoS of the communication session of the UE 110 served by the cell 120a, 120b, may be determined based on the received information concerning slice status of the cell 120a, 120b and the received information concerning required slice support of the communication session of the UE 110 in some embodiments.

In some embodiments, the QoS for the communication session of the UE 110 may be determined based at least partly on the received information concerning slice status of the determined cells 120a, 120b along the flight path 160 and the received information concerning required slice support of the communication session of the UE 110.

By mapping UE expectations in terms of slice support with cell capabilities, any change in QoS along the flight path 160 when changing serving cells 120a, 120b may be detected.

**Step 607,** which may not necessarily be performed in all embodiments, comprises transmitting information concerning the determined QoS of the communication session, to the UE 110.

In some embodiments, the method 600 may comprise information, which may comprise receiving a threshold limit for each QoS parameter that is associated with each supported QoS profile of a QoS flow based on Vehicle to Everything (V2X) application requirement, from an Access and Mobility Management Function 130. Also, the method 600 may comprise comparing the received threshold limit with predicted value of a QoS parameter. In addition, the method 600 may comprise transmitting an alert to the UE 110 when the predicted QoS parameter takes a value outside the received threshold limit.

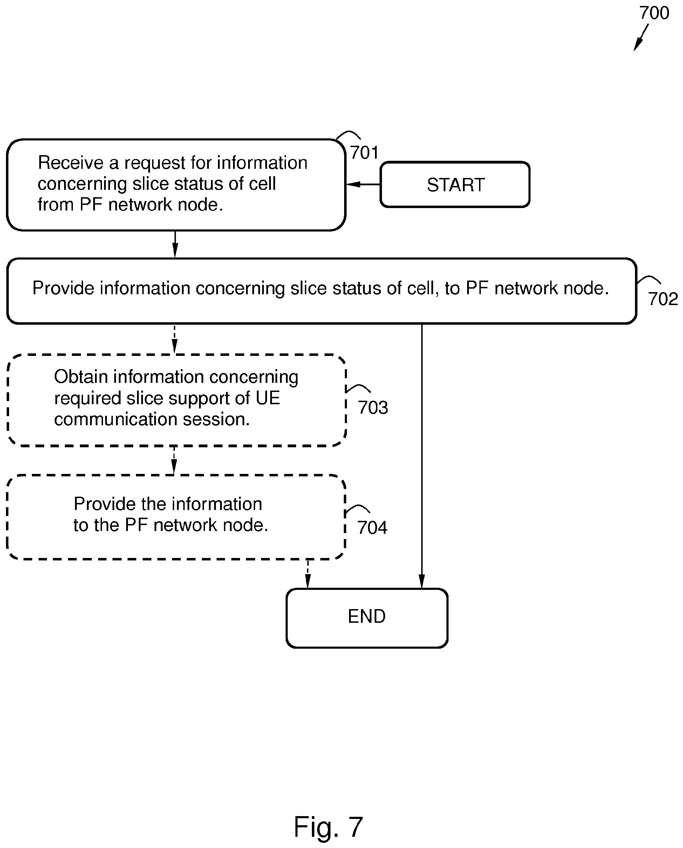

**Figure 7** is a flow chart illustrating embodiments of a method **700** in a network node 120a, 120b, 130, 140, for providing information concerning slice status of a cell 120a, 120b, to a prediction function network node 150, wherein the provided information forms a support for enabling the prediction function network node 150 to determine QoS of a communication session of a UE 110 served by the cell 120a, 120b.

The network node 120a, 120b, 130, 140 may be associated with, i.e. comprised in a source serving cell 120a of the UE 110, a target serving cell 120b of the UE 110, or an AMF/ SMF 130 and/ or a NWDAF 140 respectively in different embodiments.

In order to provide the information to the prediction function network node 150 correctly, the method 700 may comprise a number of steps **701-704.** However, some of these steps 701-704 may be performed solely in some alternative embodiments, like e.g. step 703, and/ or 704. Further, the described steps 701-704 may be performed in a somewhat different chronological order than the numbering suggests. The method 700 may comprise the subsequent steps:
**Step 701** comprises receiving a request for information concerning slice status of a cell 120a, 120b, from the prediction function network node 150.

The received request may comprise a periodicity for the network node 120a, 120b, 130, 140 to report the information concerning slice status of the cell 120a, 120b, to the prediction function network node 150.

The periodicity may determine a time interval for reporting/ updating the current slice status of the cell 120a, 120b.

The requested information may comprise e.g. serving cell information, serving cell capability in terms of Slice Support, Network Slice Selection Assistance Information per Tracking Area Identity, Radio Access Technology, frequency in use, current load and residual capacity per slice, local weather, past history of Signal to Noise Plus Interference Ratio (SNIR) measurements, support of Carrier Aggregation, support of Dual Connectivity, and/ or support of Coordinated Multi-Point Access, location of the UE 110, flightpath of the UE 110, in different embodiments.

**Step 702** comprises providing the requested information concerning slice status of the cell 120a, 120b, to the prediction function network node 150, wherein the provided information forms a support for enabling the prediction function network node 150 to determine QoS of a communication session of the UE 110 served by the cell 120a, 120b.

**Step 703,** which may not necessarily be performed in all embodiments, comprises obtaining information concerning required slice support of the communication session of the UE 110.

**Step 704** which may be performed only in some embodiments wherein step 703 has been performed, comprises providing the obtained 703 information to the prediction function network node 150.

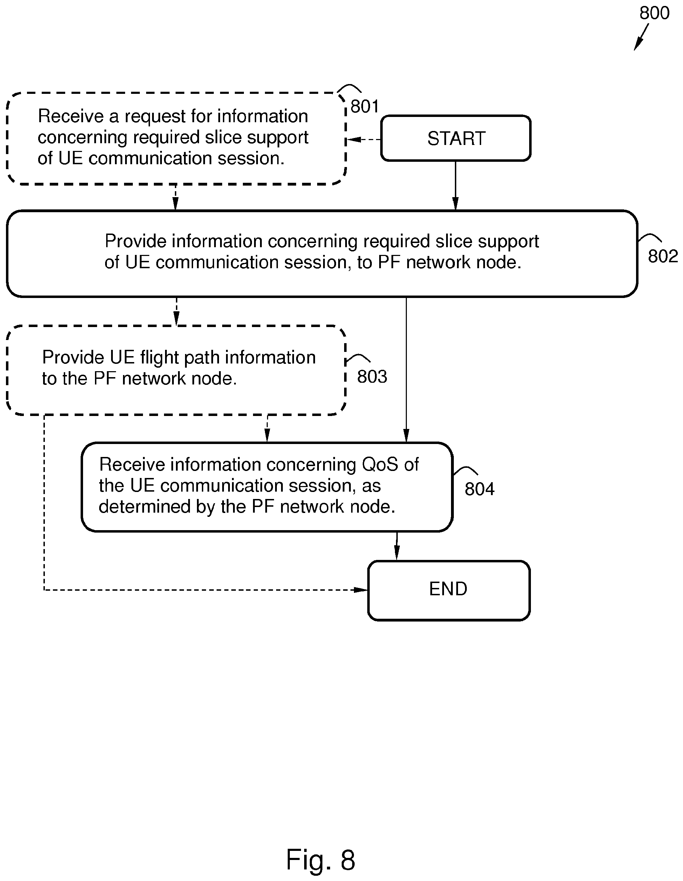

**Figure 8** is a flow chart illustrating embodiments of a method 800 in a UE 110 for enabling determination, by a prediction function network node 150, to determine QoS of a communication session of the UE 110.

The method 800 may comprise a number of steps 801-804. However, some of these steps 801-804 may be performed solely in some alternative embodiments, like e.g. step 801 and step 803. Further, the described steps 801-804 may be performed in a somewhat different chronological order than the numbering suggests. The method 800 may comprise the subsequent steps:
**Step 801,** which may not necessarily be performed in all embodiments, comprises receiving a request for information concerning required slice support of the UE communication session. The request may be received from the prediction function network node 150.

**Step 802** comprises providing information concerning required slice support of a communication session of the UE 110, to the prediction function network node 150.

The provided information may comprise cell capability information in terms of e.g. Slice Support, frequency ranges and RAT type used, Support for CA, DC, COMP, gathered by the UE 110. Further, an identity reference of the communication session of the UE 110 and/ or the UE 110 may be provided.

**Step 803,** which may not necessarily be performed in all embodiments, comprises providing flight path information of the UE 110, to the prediction function network node 150.

The flight path information of the UE 110 may be extracted from a navigator of a vehicle associated with the UE 110, wherein the navigation path 160 to the target destination 170 is stored. Alternatively, the flight path information may be extracted from a navigation app of the UE 110.

The flight path 160 of the UE 110 may be provided in form of geographical coordinates, or in terms of a road for example.

**Step 804** comprises receiving information concerning QoS of the communication session of the UE 110, as determined by the prediction function network node 150.

The received information may comprise e.g. a warning that the required slice support cannot be met by a subsequent cell 120b further down the flight path 160 towards the destination 170. The UE 110 may thereby adapt for example vehicle speed and/ or inter-vehicular distance based on the received information.

The opposite case may also occur, i.e. that the subsequent cell 120b on the flight path 160 may support a higher QoS than the current cell 120a of the UE 110. If this is the case, QoS flow of the PDU session may move to a higher-order QoS profile for example through a PDU Session modification procedure.

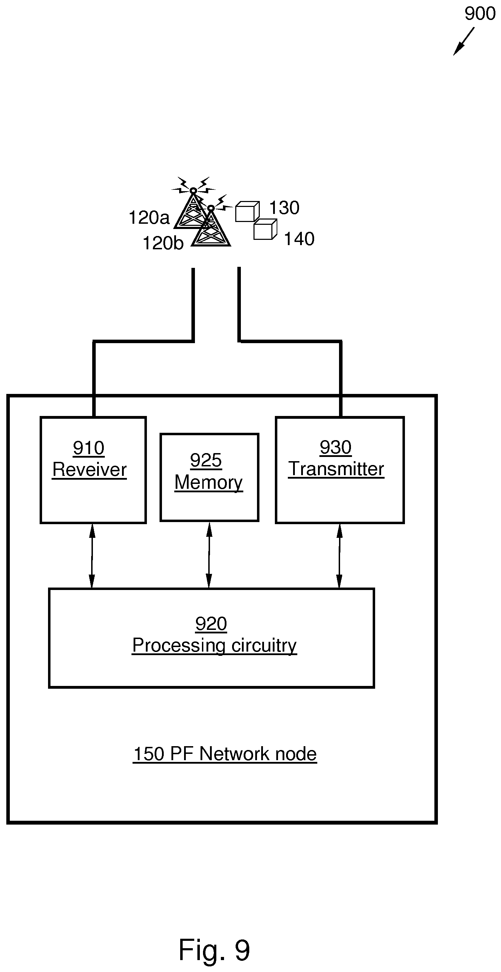

**Figure 9** illustrates a network **900** and various network nodes 120a, 120b, 130, 140, and in particular an embodiment of a prediction function network node 150. The prediction function network node 150 is configured to perform at least some of the method steps 601-607 for determining QoS of a communication session of a UE 110.

The prediction function network node 150 is configured to transmit a request for information concerning slice status of a cell 120a, 120b, to a network node 120a, 120b, 130, 140. Further, the prediction function network node 150 is configured to receive the requested information concerning slice status of the cell 120a, 120b from the network node 120a, 120b, 130, 140. In addition, the prediction function network node 150 is also configured to determine QoS of a communication session of the UE 110 served by the cell 120a, 120b, at least partly based on the received information.

The slice support of the communication session of the UE 110 may then be estimated by the prediction function network node 150 based on knowledge (such as statistics) of other UEs in the area at a corresponding moment in time, for example. By knowing slice support of communication sessions of corresponding UEs at corresponding moment in time, the slice support of the communication session of the UE 110 may be approximated.

In some embodiments, the prediction function network node 150 may be configured to determine a periodicity for the network node 120a, 120b, 130, 140 to report the information concerning slice status of the cell 120a, 120b. This determined periodicity may be comprised in the request for information transmitted to the network node 120a, 120b, 130, 140.

Further, the prediction function network node 150 may be configured to receive information concerning required slice support of the communication session of the UE 110.

The prediction function network node 150 may also be configured to determine QoS of the communication session of the UE 110 served by the cell 120a, 120b, based on the received information concerning slice status of the cell 120a, 120b and the received information concerning required slice support of the communication session of the UE 110.

In addition, the prediction function network node 150 may be configured to transmit information concerning the determined QoS of the communication session, to the UE 110.

The prediction function network node 150 may be configured to receive flight path information of the UE 110. Also, the prediction function network node 150 may furthermore be configured to determine cells 120a, 120b along the flight path 160 of the UE 110 according to the received flight path information. Further, the prediction function network node 150 may be configured to determined QoS for the communication session of the UE 110, based at least partly on the received information concerning slice status of the determined cells 120a, 120b along the flight path 160 and the received information concerning required slice support of the communication session of the UE 110.

In some embodiments, the prediction function network node 150 may be configured to receive a threshold limit for a QoS parameter associated with each supported QoS profile per QoS flow, based on Vehicle to Everything (V2X) application requirement, from an AMF 130. Also, the prediction function network node 150 may be further configured to compare the received threshold limit with predicted QoS parameter. The prediction function network node 150 may also be configured to transmit an alert to the UE 110 when the predicted QoS parameter has a value outside the received threshold limit.

The prediction function network node 150 may comprise a processing circuitry 920. The processing circuitry 920 is configured to perform at least some of the above described actions 601-607, when loaded into the processing circuitry 920.

Such processing circuitry 920 may comprise one or more instances of a processing circuit, i.e. a Central Processing Unit (CPU), a processing unit, a processor, an Application Specific Integrated Circuit (ASIC), a microprocessor, or other processing logic that may interpret and execute instructions. The herein utilised expression "processing circuitry" may thus represent a processing circuitry comprising a plurality of processing circuits, such as, e.g., any, some or all of the ones enumerated above.

Furthermore, the prediction function network node 150 also may comprise a receiving circuit **910** in some embodiments, for receiving signalling from the network node 120a, 120b, 130, 140 over a wired or wireless communication interface.

The prediction function network node 150 also comprises a transmitting circuit **930,** configured to transmit signals to the network node 120a, 120b, 130, 140 over the wired or wireless communication interface.

The method 600 comprising the method steps 601-607; the method 700 comprising the method steps 701-704; and/ or the method 800 comprising the method steps 801-804 may be implemented through the one or more processing circuitries 920 together with computer program product for performing the functions of the methods 600, 700, 800, for (enabling) determination, by the prediction function network node 150 of QoS of the communication session of the UE 110 when being served by the respective cells 120a, 120b along the flight path 160 of the UE 110.

Thus, a computer program comprising program code for performing the method 600 according to any embodiment of steps 601-607, the method 700 comprising the method steps 701-704, and/ or the method 800 comprising the method steps 801-804 may be performed when the computer program runs on a computer.

The computer program product mentioned above may be provided for instance in the form of a data carrier carrying computer program code for performing the respective methods 600, 700, 800. The data carrier may be, e.g., a hard disk, a CD ROM disc, a memory stick, an optical storage device, a magnetic storage device or any other appropriate medium such as a disk or tape that may hold machine readable data in a non-transitory manner. The computer program product may furthermore be provided as computer program code on a server and downloaded to the network node 120a, 120b, 130, 140, the prediction function network node 150 and/ or UE 110, e.g., over an Internet or an intranet connection.

The terminology used in the description of the embodiments as illustrated in the accompanying drawings is not intended to be limiting of the described methods 600, 700, 800, network nodes 120a, 120b, 140, prediction function network node 150 and/ or UE 110.

As used herein, the term "and/ or" comprises any and all combinations of one or more of the associated listed items. The term "or" as used herein, is to be interpreted as a mathematical OR, i.e., as an inclusive disjunction; not as a mathematical exclusive OR (XOR), unless expressly stated otherwise. In addition, the singular forms "a", "an" and "the" are to be interpreted as "at least one", thus also possibly comprising a plurality of entities of the same kind, unless expressly stated otherwise. It will be further understood that the terms "includes", "comprises", "including" and/ or "comprising", specifies the presence of stated features, actions, integers, steps, operations, elements, and/ or components, but do not preclude the presence or addition of one or more other features, actions, integers, steps, operations, elements, components, and/ or groups thereof. A single unit such as e.g. a processor may fulfil the functions of several items recited in the claims. The mere fact that certain measures are recited in mutually different dependent claims does not indicate that a combination of these measures cannot be used to advantage. A computer program may be stored/ distributed on a suitable medium, such as an optical storage medium or a solid-state medium supplied together with or as part of other hardware but may also be distributed in other forms such as via Internet or other wired or wireless communication system.

## Claims

1. A prediction function network node (150), configured to:
transmit a request for information concerning slice status of a cell (120a, 120b), to a network node (120a, 120b, 130, 140);
receive the requested information concerning slice status of the cell (120a, 120b) from the network node (120a, 120b, 130, 140); the prediction function network node (150) being **characterised in that** it is further configured to:
determine Quality of Service of a communication session of a user equipment (110) served by the cell (120a, 120b), based on the received information:
receive information concerning required slice support of the communication session of the user equipment (110);
receive flight path information of the user equipment (110); and
determine cells (120a, 120b) along the flight path (160); and wherein the determined Quality of Service for the communication session of the user equipment (110) is based on the received information concerning slice status of the determined cells (120a, 120b) along the flight path (160) and the received information concerning required slice support of the communication session of the user equipment (110).

2. The prediction function network node (150) according to claim 1, wherein the transmitted request comprises a periodicity for the network node (120a, 120b, 130, 140) to report the information concerning slice status of the cell (120a, 120b).

3. The prediction function network node (150) according to claim 1 or 2, further configured to:
determine Quality of Service of the communication session of the user equipment (110) served by the cell (120a, 120b), based on the received information concerning slice status of the cell (120a, 120b) and the received information concerning required slice support of the communication session of the user equipment (110).

4. The prediction function network node (150) according to any one of claims 1-3, further configured to:
transmit information concerning the determined Quality of Service of the communication session, to the user equipment (110).

5. The prediction function network node (150) according to any one of claims 1-4, further configured to:
receive a threshold limit for a Quality of Service parameter making up a currently supported QoS profile per QoS flow, based on Vehicle to Everything "V2X" application requirement, from an Access and Mobility Management Function (130);
estimate the Quality of Service parameter;
compare the received threshold limit with the estimated Quality of Service parameter; and
transmit an alert to the user equipment (110) when the estimated Quality of Service parameter has a value outside the received threshold limit.

6. A method (600), performed by a prediction function network node (150), wherein the method (600) comprises the step of:
transmitting (601) a request for information concerning slice status of a cell (120a, 120b), to a network node (120a, 120b, 130, 140);
receiving (602) the requested information concerning slice status of the cell (120a, 120b), from the network node (120a, 120b, 130, 140); the method (600) being **characterised in that** it further comprises the steps of:
determining (606) Quality of Service of a communication session of a user equipment (110) served by the cell (120a, 120b), based on the received (602) information,
receiving information concerning required slice support of the communication session of the user equipment (110);
receiving flight path information of the user equipment (110); and
determining cells (120a, 120b) along the flight path (160); and wherein the determined Quality of Service for the communication session of the user equipment (110) is based on the received information concerning slice status of the determined cells (120a, 120b) along the flight path (160) and the received information concerning required slice support of the communication session of the user equipment (110).

7. A computer program with a program code for performing a method (600) according to claim 6 in a prediction function network node (150) according to any one of claims 1-5, when the computer program runs on a computer.

## Patentansprüche

1. Vorhersagefunktionsnetzwerkknoten (150), der konfiguriert ist zum:
Übertragen einer Anforderung nach Informationen bezüglich eines Slice-Status einer Zelle (120a, 120b) an einen Netzwerkknoten (120a, 120b, 130, 140);
Empfangen der angeforderten Informationen bezüglich des Slice-Status der Zelle (120a, 120b) von dem Netzwerkknoten (120a, 120b, 130, 140); wobei der Vorhersagefunktionsnetzwerkknoten (150), **dadurch gekennzeichnet ist, dass** er ferner konfiguriert ist zum:
Bestimmen einer Dienstgüte einer Kommunikationssitzung einer Benutzereinrichtung (110), die durch die Zelle (120a, 120b) bedient wird, basierend auf den empfangenen Informationen;
Empfangen von Informationen bezüglich einer erforderlichen Slice-Unterstützung der Kommunikationssitzung der Benutzereinrichtung (110);
Empfangen von Flugbahninformationen der Benutzereinrichtung (110); und
Bestimmen von Zellen (120a, 120b) entlang der Flugbahn (160); und wobei die bestimmte Dienstgüte für die Kommunikationssitzung der Benutzereinrichtung (110) auf den empfangenen Informationen bezüglich des Slice-Status der bestimmten Zellen (120a, 120b) entlang der Flugbahn (160) und den empfangenen Informationen bezüglich der erforderlichen Slice-Unterstützung der Kommunikationssitzung der Benutzereinrichtung (110) basiert.

2. Vorhersagefunktionsnetzwerkknoten (150) nach Anspruch 1, wobei die übertragene Anforderung eine Periodizität für den Netzwerkknoten (120a, 120b, 130, 140) umfasst, um die Informationen bezüglich des Slice-Status der Zelle (120a, 120b) zu berichten.

3. Vorhersagefunktionsnetzwerkknoten (150) nach Anspruch 1 oder 2, der ferner konfiguriert ist zum:
Bestimmen der Dienstgüte der Kommunikationssitzung der Benutzereinrichtung (110), die durch die Zelle (120a, 120b) bedient wird, basierend auf den empfangenen Informationen bezüglich des Slice-Status der Zelle (120a, 120b) und den empfangenen Informationen bezüglich der erforderlichen Slice-Unterstützung der Kommunikationssitzung der Benutzereinrichtung (110).

4. Vorhersagefunktionsnetzwerkknoten (150) nach einem der Ansprüche 1 bis 3, der ferner konfiguriert ist zum:
Übertragen von Informationen bezüglich der bestimmten Dienstgüte der Kommunikationssitzung an die Benutzereinrichtung (110).

5. Vorhersagefunktionsnetzwerkknoten (150) nach einem der Ansprüche 1 bis 4, der ferner konfiguriert ist zum:
Empfangen einer Schwellenwertgrenze für einen Dienstgüteparameter, der ein aktuell unterstütztes QoS-Profil pro QoS-Fluss ausmacht, basierend auf einer Vehicle-to-Everything(V2X)-Anwendungsanforderung, von einer Zugriffs- und
Mobilitätsverwaltungsfunktion (130);
Schätzen des Dienstgüteparameters;
Vergleichen der empfangenen Schwellenwertgrenze mit dem geschätzten Dienstgüteparameter; und
Übertragen einer Warnung an die Benutzereinrichtung (110), wenn der geschätzte Dienstgüteparameter einen Wert außerhalb der empfangenen Schwellenwertgrenze aufweist.

6. Verfahren (600), das durch einen Vorhersagefunktionsnetzwerkknoten (150) durchgeführt wird, wobei das Verfahren (600) den Schritt umfasst zum:
Übertragen (601) einer Anforderung nach Informationen bezüglich des Slice-Status einer Zelle (120a, 120b) an einen Netzwerkknoten (120a, 120b, 130, 140);
Empfangen (602) der angeforderten Informationen bezüglich des Slice-Status der Zelle (120a, 120b) von dem Netzwerkknoten (120a, 120b, 130, 140); wobei das Verfahren (600) **dadurch gekennzeichnet ist, dass** es ferner die Schritte umfasst zum:
Bestimmen (606) der Dienstgüte einer Kommunikationssitzung einer Benutzereinrichtung (110), die durch die Zelle (120a, 120b) bedient wird, basierend auf den empfangenen (602) Informationen,
Empfangen von Informationen bezüglich der erforderlichen Slice-Unterstützung der Kommunikationssitzung der Benutzereinrichtung (110);
Empfangen von Flugbahninformationen der Benutzereinrichtung (110); und
Bestimmen von Zellen (120a, 120b) entlang der Flugbahn (160); und wobei die bestimmte Dienstgüte für die Kommunikationssitzung der Benutzereinrichtung (110) auf den empfangenen Informationen bezüglich des Slice-Status der bestimmten Zellen (120a, 120b) entlang der Flugbahn (160) und den empfangenen Informationen bezüglich der erforderlichen Slice-Unterstützung der Kommunikationssitzung der Benutzereinrichtung (110) basiert.

7. Computerprogramm mit einem Programmcode zum Durchführen eines Verfahrens (600) nach Anspruch 6 in einem Vorhersagefunktionsnetzwerkknoten (150) nach einem der Ansprüche 1 bis 5, wenn das Computerprogramm auf einem Computer läuft.

## Revendications

1. Nœud de réseau à fonction de prédiction (150), configuré pour :
transmettre une demande d'informations concernant un état de tranche d'une cellule (120a, 120b) à un nœud de réseau (120a, 120b, 130, 140) ;
recevoir les informations demandées concernant un état de tranche de la cellule (120a, 120b) en provenance du nœud de réseau (120a, 120b, 130, 140) ; le nœud de réseau à fonction de prédiction (150) étant **caractérisé en ce qu'il** est en outre configuré pour :
déterminer une qualité de service d'une session de communication d'un équipement utilisateur (110) desservi par la cellule (120a, 120b), sur la base des informations reçues ;
recevoir des informations concernant une prise en charge de tranche requise de la session de communication de l'équipement utilisateur (110) ;
recevoir des informations de trajectoire de vol de l'équipement utilisateur (110) ; et
déterminer des cellules (120a, 120b) le long de la trajectoire de vol (160) ; et dans lequel la qualité de service déterminée pour la session de communication de l'équipement utilisateur (110) est basée sur les informations reçues concernant un état de tranche des cellules (120a, 120b) déterminées le long de la trajectoire de vol (160) et les informations reçues concernant une prise en charge de tranche requise de la session de communication de l'équipement utilisateur (110).

2. Nœud de réseau à fonction de prédiction (150) selon la revendication 1, dans lequel la demande transmise comprend une périodicité pour le nœud de réseau (120a, 120b, 130, 140) afin de rapporter les informations concernant un état de tranche de la cellule (120a, 120b).

3. Nœud de réseau à fonction de prédiction (150) selon la revendication 1 ou 2, configuré en outre pour :
déterminer une qualité de service de la session de communication de l'équipement d'utilisateur (110) desservi par la cellule (120a, 120b), sur la base des informations reçues concernant un état de tranche de la cellule (120a, 120b) et des informations reçues concernant une prise en charge de tranche requise de la session de communication de l'équipement d'utilisateur (110).

4. Nœud de réseau à fonction de prédiction (150) selon l'une quelconque des revendications 1 à 3, configuré en outre pour :
transmettre des informations concernant la qualité de service déterminée de la session de communication, à l'équipement utilisateur (110).

5. Nœud de réseau à fonction de prédiction (150) selon l'une quelconque des revendications 1 à 4, configuré en outre pour :
recevoir un seuil limite pour un paramètre de qualité de service constituant un profil QoS actuellement pris en charge par flux QoS, sur la base d'une exigence d'application véhicule à tout « V2X », en provenance d'une fonction de gestion d'accès et de mobilité (130) :
estimer le paramètre de qualité de service ;
comparer le seuil limite reçu avec le paramètre de qualité de service estimé ; et
transmettre une alerte à l'équipement utilisateur (110) lorsque le paramètre de qualité de service estimé a une valeur en dehors du seuil limite reçu.

6. Procédé (600), réalisé par un nœud de réseau à fonction de prédiction (150), dans lequel le procédé (600) comprend l'étape consistant à :
transmettre (601) une demande d'informations concernant un état de tranche d'une cellule (120a, 120b), à un nœud de réseau (120a, 120b, 130, 140) ;
recevoir (602) les informations demandées concernant un état de tranche de la cellule (120a, 120b), en provenance du nœud de réseau (120a, 120b, 130, 140) ; le procédé (600) étant **caractérisé en ce qu'**il comprend en outre les étapes consistant à :
déterminer (606) une qualité de service d'une session de communication d'un équipement utilisateur (110) desservi par la cellule (120a, 120b), sur la base des informations reçues (602),
recevoir des informations concernant une prise en charge de tranche requise de la session de communication de l'équipement utilisateur (110) ;
recevoir des informations de trajectoire de vol de l'équipement utilisateur (110) ; et
déterminer des cellules (120a, 120b) le long de la trajectoire de vol (160) ; et dans lequel la qualité de service déterminée pour la session de communication de l'équipement utilisateur (110) est basée sur les informations reçues concernant un état de tranche des cellules (120a, 120b) déterminées le long de la trajectoire de vol (160) et les informations reçues concernant une prise en charge de tranche requise de la session de communication de l'équipement utilisateur (110).

7. Programme informatique avec un code de programme permettant de réaliser un procédé (600) selon la revendication 6 dans un nœud de réseau à fonction de prédiction (150) selon l'une quelconque des revendications 1 à 5, lorsque le programme informatique s'exécute sur un ordinateur.
